# EUROPÄISCHE PATENTSCHRIFT

(11) **EP 3 024 722 B1**
(45) Veröffentlichungstag und Bekanntmachung des Hinweises auf die Patenterteilung: **07.06.2017**
(21) Anmeldenummer: 14789134.5
(22) Anmeldetag: 17.07.2014
(51) Int. Cl.: B64C 7/00, B64C 9/02

(54) **FORMVARIABLE SPALTABDECKUNG ZWISCHEN STEUERFLÄCHEN UND ANGRENZENDEN STRUKTUR-BAUTEILEN AN FLUGZEUGEN**
SHAPE-VARIABLE GAP COVERING BETWEEN CONTROL SURFACES AND ADJACENT STRUCTURAL COMPONENTS ON AIRCRAFTS
RECOUVREMENT DE FENTE À FORME VARIABLE ENTRE DES SURFACES DE COMMANDE ET DES ÉLÉMENTS DE STRUCTURE ADJACENTS SUR DES AVIONS

(30) Priorität: 20.07.2013 DE 102013012169
(43) Veröffentlichungstag der Anmeldung: 01.06.2016
(73) Patentinhaber: Airbus Defence and Space GmbH, 85521 Ottobrunn (DE)
(72) Erfinder: DA ROCHA-SCHMIDT, Luiz, 81673 München (DE)
(74) Vertreter: Lorenz & Kopf PartG mbB Patentanwälte, LKGLOBAL
(86) Internationale Anmeldenummer: PCT/DE2014/000363
(87) Internationale Veröffentlichungsnummer: WO 2015/010676

(56) Entgegenhaltungen:
- EP-A2- 1 857 359
- DE-A1-102011 018 907
- DE-U1- 9 113 090
- GB-A- 741 718
- US-A- 4 429 844
- US-A1- 2006 118 675
- US-A1- 2011 303 796

## Beschreibung

Die vorliegende Erfindung betrifft eine Vorrichtung zur Überbrückung von Spalten zwischen beweglichen und/oder starren Strukturbauteilen.

Bei konventionellen Klappen/Steuerflächen entstehen im ausgefahrenen Zustand Spalten. Diese ermöglichen es der Luft, hindurch zu strömen, was die Effizienz der Klappe reduziert sowie Lärm-Emissionen erzeugt. Ein weiterer Aspekt, insbesondere im militärischen Bereich, ist die Radar-Signatur. An solchen Spalten werden Oberflächenwellen abgestrahlt. Eine übliche Methode, dies zu reduzieren, ist das "Clipping", also das abrunden von scharfen Kanten an der Steuerfläche.

Aus der US 2011/0303796 ist ein Übergangsabschnitt bekannt, der eine kontinuierliche Kontur über einen Spalt hinweg bildet. Hierfür weist der Übergangsabschnitt eine Mehrzahl von Rippen auf, die schwenkbar an einem Basisteil befestigbar sind, wobei der Übergang dadurch realisiert wird, dass jeweils benachbarte Rippen stufenweise mehr oder weniger geschwenkt werden, bis zu einer Gesamtauslenkung.

Die DE 91 13 090 U1 beschreibt eine Möglichkeit, einen Spalt zwischen einer Klappe und einer seitlich angrenzenden starren Kante eines Flügels durch eine Platte zu schließen. Hierzu kann ein dreieckiges Plattenteil vorgesehen sein, dessen eine Seite an dem seitlichen Rand der Klappe angelenkt ist und dessen andere Seite in einem Spalt im Rand der Flügelkante ein- und ausschiebbar und schwenkbar gehalten ist. Zumindest eine Seite muss hierbei durch eine Verschiebung eine Längenveränderung zulassen, die durch eine Winkelveränderung zwischen der Klappe und der Flügelkante bedingt ist.

Aufgabe der vorliegenden Erfindung ist es, eine formvariable, nachgiebige und flexible Verbindung zwischen beweglichen und/oder nicht beweglichen

Strukturbauteilen bereitzustellen, die gleichzeitig eine hohe Steifigkeit gegenüber Luftlasten besitzt.

Diese und weitere Aufgaben werden durch ein Übergangsstück gemäß dem unabhängigen Anspruch gelöst. Weitere vorteilhafte Ausführungsformen sind in den abhängigen Ansprüchen beschrieben.

Durch ein erfindungsgemäßes Übergangsstück können Spalten zum Beispiel an einer Flugzeug-Tragfläche in Spannweitenrichtung abgedeckt werden, wodurch einerseits die Klappenwirksamkeit verbessert wird und andererseits eine Weiterführung von Oberflächenwellen, d.h. eine Radar-Abstrahlung verhindert wird.

Im Allgemeinen ist ein erfindungsgemäßes Übergangsstück in einer Aussparung anbringbar und bildet eine kontinuierliche Oberfläche von einem Strukturbauteil eines Flugzeugs zu einer Steuerfläche, die schwenkbar mit dem Strukturbauteil verbunden ist. Das Übergangsstück kann so zwischen einem Rand des Strukturbauteils und einem Seitenrand der Steuerfläche angebracht werden, dass es sowohl an dem Rand des Strukturbauteils als auch an dem Seitenrand der Steuerfläche schwenkbar befestigt ist. Das Übergangsstück ist gemäß einer Ausführungsform eben ausgebildet und ist innerhalb dieser Ebene verformbar, d.h. kann innerhalb dieser Ebene gestreckt/auseinandergezogen oder auch gestaucht/zusammengeschoben werden.

Gemäß der Erfindung weist das Übergangsstück eine Stützstruktur mit sich kreuzenden Rippen auf. Die sich kreuzenden Rippen können schwenkbaren miteinander verbunden sein. Ferner können die Rippen ein Profil aufweisen, welches im Wesentlichen dem Profil der benachbarten Steuerfläche und/oder dem Profil des benachbarten Strukturbauteils entspricht.

Gemäß einer Ausführungsform können die Rippen jeweils parallel zum Seitenrand der Steuerfläche oder zum Rand des Strukturbauteils ausgerichtet sein. Auf diese Weise kann durch die Rippen ein pantographischer Mechanismus gebildet werden.

Gemäß einer weiteren Ausführungsform weist das Übergangsstück eine schubweiche Außenhaut auf. Die schubweiche Außenhaut kann ein biaxial gewebtes Metallgitter aufweisen. Ferner kann die schubweiche Außenhaut eine Elastomerschicht aufweisen.

Gemäß einer Ausführungsform kann der Rand des Übergangsstücks, der mit dem Seitenrand der Steuerfläche verbunden ist, zu dem Rand des Übergangsstücks, der mit dem Rand des Strukturbauteils verbunden ist, einen Winkel von 30° bis 120° einschließen. Gemäß einer anderen Ausführungsform kann ein Winkel von 45° bis 75° eingeschlossen sein. Gemäß einer weiteren Ausführungsform kann ein Winkel von 60° eingeschlossen sein.

Ein erfindungsgemäßes Übergangsstück kann insbesondere an einem Flugzeug verwendet werden. Entsprechend kann ein Flugzeug ein Strukturbausteil und eine Steuerfläche aufweisen, die schwenkbar an dem Strukturbauteil befestigt ist, wobei eine Aussparung zwischen einem Seitenrand der Steuerfläche und einem Rand des Strukturbauteils ausgebildet ist, wobei ein erfindungsgemäßes Übergangsstück zur Überbrückung der Aussparung vorgesehen ist.

Gemäß einer weiteren Ausführungsform kann das Übergangsstück in Form eines Dreiecks ausgebildet sein.

Im Allgemeinen kann ein Übergangsstück gemäß der Erfindung eine Kombination einer Stützstruktur, beispielsweise in Form eines Panthografen, und einer schubweichen Außenhaut, beispielsweise in Form eines gewebten Metallgitters, aufweisen.

Durch die Abdeckung von Spalten zwischen zwei benachbarten Klappen, sowie auch zwischen Klappen und angrenzenden Strukturbauteilen lassen sich mit dem gezeigten Konzept Flugzeuge mit verbesserter aerodynamischer Wirksamkeit, reduzierten Lärm-Emissionen, sowie mit verringerter Radarsignatur entwerfen. Dies macht das Konzept unter anderem für militärische Anwendungen interessant. Die Erhöhung der Aktorkräfte beim Ausschlag der Klappe ist dabei relativ gering. Mit diesem Konzept kann eine komplett durchgängige Flügel-Hinterkante erreicht werden, inklusive Steuerflächen.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

Nachfolgend wird anhand der beigefügten Zeichnungen näher auf Ausführungsbeispiele der Erfindung eingegangen. Es zeigen:
- **Fig. 1**: Stirnansicht einer Stützstruktur bei nicht-ausgelenkter Klappe
- **Fig. 2**: Draufsicht einer Stützstruktur bei nicht-ausgelenkter Klappe
- **Fig. 3**: Stirnansicht einer Stützstruktur bei ausgelenkter Klappe
- **Fig. 4**: Draufsicht einer Stützstruktur bei ausgelenkter Klappe
- **Fig. 5**: Draufsicht einer Außenhaut bei nicht-ausgelenkter Klappe
- **Fig. 6**: Draufsicht einer Außenhaut bei ausgelenkter Klappe
- **Fig. 7**: Detailansicht einer Stützstruktur

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrativ und nicht beschränkend sind.

### Detaillierte Beschreibung von Ausführungsformen

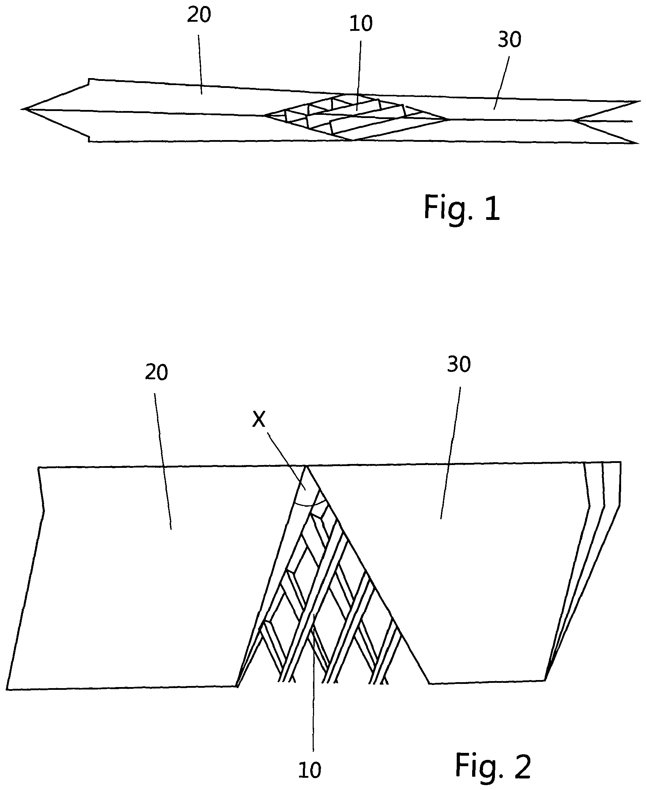

Die Figuren 1 und 2 zeigen ein Übergangsstück 10 zwischen einer Klappe 20 und einem Strukturbauteil 30, die im Wesentlichen parallel zueinander angeordnet sind. Figur 1 ist eine Stirnansicht auf eine Hinterkante der Strukturen und Figur 2 eine Draufsicht. Die Klappe 20 und das Strukturbauteil 30 werden zu einer Hinterkante hin dünner. Die Stützstruktur des Übergangsstücks 10 weist Rippen auf, die vergleichsweise dünner werden. Es wird angemerkt, dass die hier als Hinterkante bezeichnete Kante auch eine Vorderkante einer Struktur sein kann.

In der Ausführungsform der Figuren 1 und 2 ist eine Aussparung zwischen der Klappe 20 und dem Strukturbauteil 30 ausgebildet mit einem Winkel X von etwa 60°. Die Rippen des Übergangsstücks 10 sind jeweils parallel zu einem Rand der Klappe 20 bzw. des Strukturbauteils 30 angeordnet, sind also ebenfalls in einem Winkel von etwa 60° zueinander angeordnet.

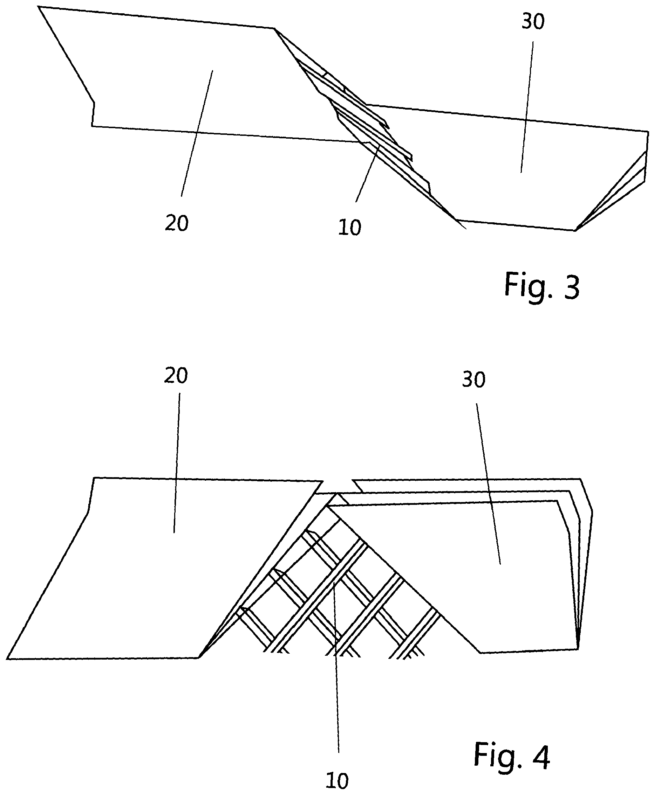

Die Figuren 3 und 4 zeigen ein Übergangsstück 10 zwischen einer Klappe 20 und einem Strukturbauteil 30, wobei die Klappe 20 relativ zu dem Strukturbauteil 30 geschwenkt ist. Beispielsweise kann eine Klappe in etwa um 30° relative zu einem benachbarten unbeweglichen Strukturbauteil auslenkbar werden. Für den Fall, dass zwei bewegliche Strukturen, zum Beispiel Klappen, nebeneinander angeordnet sind, können diese um bis zu 60° relative zueinander ausgelenkt werden, beispielsweise eine um 30° nach oben und die andere um 30° nach unten.

Insbesondere in Figur 4 ist erkennbar, dass die Stützstruktur des Übergangsstücks 10 auf einen Winkel von etwa 90° / einen erhöhten Winkel auseinandergezogen ist im Vergleich zu der Situation, die in Figur 2 dargestellt ist.

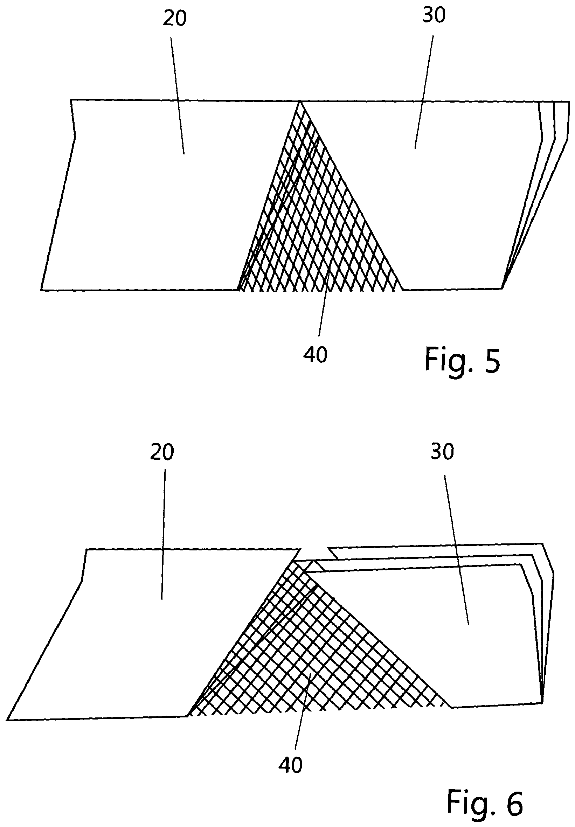

Die Figuren 5 und 6 zeigen eine Außenhaut 40 eines Übergangsstücks in Form eines gewebten Metallgitters, wobei die Klappe 20 in Figur 5 im Wesentlichen parallel zum Strukturbauteil 30 angeordnet ist und wobei die Klappe 20 in Figur 6 ausgelenkt relativ zu dem Strukturbauteil 30 angeordnet ist. Auch hier ist erkennbar, dass die einzelnen Drähte des Metallgewebes verschoben sind, so dass eine verlängerte Hinterkante des Übergangsstücks ermöglicht ist, wenn die Klappe 20 ausgelenkt ist. Wie auch bei der Stützstruktur 10 sind die einzelnen Drähte des Metallgitters im Wesentlichen parallel zu einer der beiden Kanten der Klappe und des Strukturbauteils angeordnet. Ein Übergangsbereich, beispielsweise aus einem reinen Elastomer zwischen der Außenhaut und den angrenzenden Klappen / Strukturbauteilen kann vorgesehen werden um relative Verschiebungen auszugleichen.

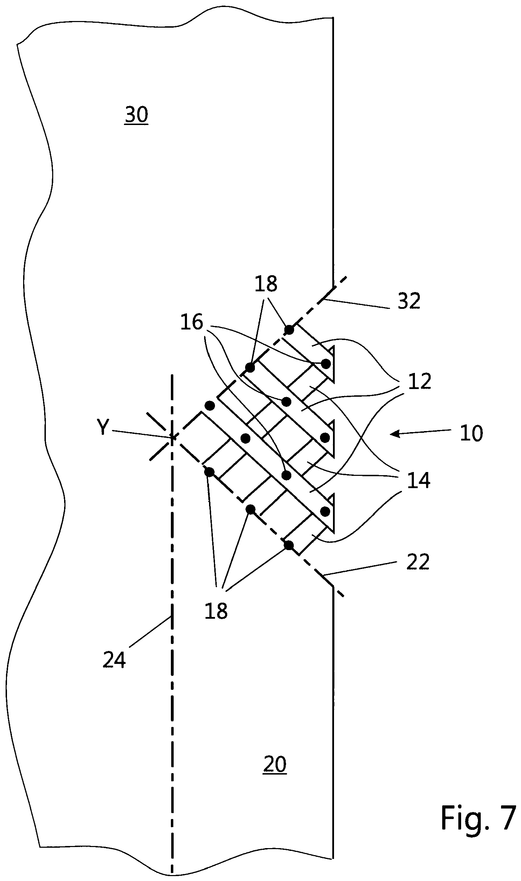

Figur 7 ist eine Detailansicht eines Übergangsstücks, welches zwischen einer Klappe 20 und einem Strukturbauteil 30 angeordnet werden kann. Die Stützstruktur 10 des Übergangsstücks weist erste Rippen 12 auf, die parallel zur einem Seitenrand 22 der Klappe 20 angeordnet sind, und zweite Rippen 14, die parallel zum Rand 32 des Strukturbauteil 30 angeordnet sind. Die ersten Rippen 12 sind gelenkig mit den zweiten Rippen 14 verbunden. Zwischen den ersten Rippen 12 und den zweiten Rippen 14 können Achsstifte 16 vorgesehen sein, zum gelenkigen verbinden der Rippen miteinander.

Jede einzelne der ersten Rippen 12 ist am Rand 32 mit dem Strukturbauteil 30 gelenkig verbunden und jede einzelne der zweiten Rippen 14 ist am Seitenrand 22 mit der Klappe 20 gelenkig verbunden. Die Gelenke 18, mittels derer die Rippen an der Klappe bzw. an dem Strukturbauteil befestigt sind, sind derart ausgestaltet, dass sie eine Schwenkbewegung der Rippe um eine Achse ermöglicht, die senkrecht zur Bildebene der Figur 7 steht, womit eine pantographische Bewegung, d.h. eine Scherbewegung innerhalb der Ebene der Stützstruktur ermöglicht wird. Ferner sind die Gelenke 18 derart ausgebildet, dass sie eine Schwenkbewegung der Rippe um eine Achse ermöglicht, die innerhalb der Bildebene der Figur 7 liegt und die durch die Strich-Punkt-Linie durch die Punkte 18 dargestellt ist.

In Figur 7 ist ferner eine Strich-Punkt-Linie 24 gezeigt. Die Linie 24 ist diejenige Achse, um welche die Klappe 20 relativ zu dem Strukturbauteil 30 geschwenkt werden kann. Es wird angemerkt, dass eine Funktion des Übergangsstücks insbesondere gewährleistet ist, wenn sich die Achsen 22, 24 und 32 in einem Punkt Y schneiden.

Dadurch, dass sich die Gelenkslinie zwischen Klappen und Struktur, sowie die zwei Gelenkslinien der Stützstruktur 10 im Punkt Y schneiden, entsteht in der dreieckigen Übergangsebene eine reine Schubverformung. Eine derart angeordnete Stützstruktur kann bei korrekter Ausrichtung, d.h. mit den Rippen parallel zu den Rändern, diese Schubverformung kraftfrei mitmachen. Das Hautmaterial muss dieser Verformung ebenfalls mitmachen. Hier bietet sich ein Verbund aus einem biaxial verwebten Metallgitter (wie in den Figuren 5 und 6 dargestellt), eventuell mit mehreren Lagen, dass praktisch kraftfrei schub-verformt werden kann, und einer dünnen Elastomerschicht an. Das Metallgitter stellt die elektrische Leitfähigkeit sowie eine gewisse Biegesteifigkeit bereit. Zusätzlich kann durch Füllstoffe auch das Elastomer leitfähig gemacht werden. Die Elastomerschicht sorgt für eine glatte und damit aerodynamisch günstige Oberfläche des Übergangsstücks.

Ein Elastomer-Composite als Hautmaterial kann vorteilhaft sein, da hier eine hohe elastische Dehnung notwendig ist. Gleichzeitig ist jedoch eine gewisse Steifigkeit notwendig, um die aerodynamischen Kräfte aufnehmen zu können. Die erforderliche Steifigkeit kann durch das Metallgewebe sowie die Stützstruktur bereitgestellt werden.

Das Hautmaterial kann auch in Sandwich-Bauweise hergestellt werden, d.h. aus mehreren Schichten aufgebaut sein. Zwischen jeweils einer oder mehreren Schichten aus dem Elastomer-Composite oben und unten kann hierzu ein Kernmaterial eingefügt werden, das mit geringem Kraftaufwand die gleiche Schubverformung erlaubt, wie die Deckschickten. Hierfür eignet sich beispielsweise ein quadratischer Honigwabenkern, dessen Wabenstege parallel zu den Fasern im Metallgewebe sowie zu den sich kreuzenden Rippen 12 und 14 der Stützstruktur orientiert sein können, die jedoch einen größeren Abstand als die Fasern untereinander haben. Eine Sandwichstruktur mit einer oder meherer Elastomer-Composite-Schichten, einer oder mehrerer Metallgewebe-Schichten und einer oder mehrerer Honigwabenkern-Schichten kann ebenfalls als Hautmaterial bzw. als Außenhaut vorgesehen sein. Die Biegesteifigkeit des Hautmaterials wird auf diese Weise signifikant erhöht, während die Schubsteifigkeit gering bleibt.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 10: Stützstruktur
- 12: erste Rippe
- 14: zweite Rippe
- 16: Achsstift
- 18: Gelenk
- 20: Steuerfläche / Klappe
- 22: Seitenrand der Steuerfläche
- 24: Schwenkachse der Steuerfläche
- 30: Strukturbauteil
- 32: Rand des Strukturbauteils
- 40: gewebtes Metallgitter

## Patentansprüche

1. Ein Übergangsstück zur Ausbildung einer kontinuierlichen Oberfläche von einem Strukturbauteil (30) eines Flugzeugs zu einer Steuerfläche (20), wobei die Steuerfläche (20) eine Vorderkante, eine Hinterkante und zwei Seitenränder aufweist, wobei die Vorderkante oder die Hinterkante der Steuerfläche (20) schwenkbar mit dem Strukturbauteil (30) verbunden ist, wobei das Übergangsstück in einer Aussparung anbringbar ist, die zwischen einem Rand (32) des Strukturbauteils und einem der Seitenränder (22) der Steuerfläche ausgebildet ist, wobei das Übergangsstück schwenkbar an dem Rand des Strukturbauteils anbringbar ist und schwenkbar an dem Seitenrand der Steuerfläche anbringbar ist, wobei das Übergangsstück eben ausgebildet ist und innerhalb der Ebene verformbar ist, und das Übergangsstück eine Stützstruktur (10) aus sich kreuzenden Rippen (12, 14) aufweist.

2. Das Übergangsstück nach Anspruch 1, wobei die sich kreuzenden Rippen (12, 14) schwenkbaren miteinander verbunden sind.

3. Das Übergangsstück nach einem der Ansprüche 1 oder 2, wobei die Rippen (12, 14) ein Profil aufweisen, welches im Gebrauch im Wesentlichen dem Profil der benachbarten Steuerfläche (20) und/oder dem Profil des benachbarten Strukturbauteils (30) entspricht.

4. Das Übergangsstück nach einem der Ansprüche 1 bis 3, wobei die Rippen (12, 14) jeweils parallel zum Seitenrand (22) der Steuerfläche (20) oder zum Rand (32) des Strukturbauteils (30) auszurichten sind.

5. Das Übergangsstück nach einem der Ansprüche 1 bis 4, wobei das Übergangsstück eine schubweiche Außenhaut aufweist.

6. Das Übergangsstück nach Anspruch 5, wobei die schubweiche Außenhaut ein biaxial gewebtes Metallgitter (40) aufweist.

7. Das Übergangsstück nach Anspruch 5 oder 6, wobei die schubweiche Außenhaut eine Elastomerschicht aufweist.

8. Das Übergangsstück nach einem der Ansprüche 5 bis 7, wobei die schubweiche Außenhaut aus einer Mehrzahl von sich unterscheidenden Schichten aufgebaut ist.

9. Das Übergangsstück nach einem der Ansprüche 1 bis 8, wobei der Rand des Übergangsstücks, der mit dem Seitenrand (22) der Steuerfläche (20) verbindbar ist, zu dem Rand des Übergangsstücks, der mit dem Rand (32) des Strukturbauteils (30) verbindbar ist, einen Winkel von 30° bis 120°, vorzugsweise 60° einschließt.

10. Ein Flugzeug mit einem Strukturbausteil (30) und einer Steuerfläche (20), die schwenkbar an dem Strukturbauteil befestigt ist, wobei eine Aussparung zwischen einem Seitenrand der Steuerfläche und einem Rand des Strukturbauteils ausgebildet ist, ferner mit einem Übergangsstück gemäß einem der Ansprüche 1 bis 9 zur Überbrückung der Aussparung.

## Claims

1. A transition piece for forming a continuous surface from a structural component (30) of an aircraft to a control surface (20), wherein the control surface (20) has a front edge, a rear edge and two lateral edges, wherein the front edge or the rear edge of the control surface (20) is pivotally connected to the structural component (30), wherein the transition piece is configured to be mounted in a recess formed between an edge (32) of the structural component and one of the lateral edges (22) of the control surface, wherein the transition piece is configured to be pivotally mounted on the edge of the structural component and to be pivotally mounted on the lateral edge of the control surface, and wherein the transition piece is planar and is configured to be deformed within the plane, wherein the transition piece comprises a support structure (10) including intersecting ribs (12, 14).

2. The transition piece according to claim 1, wherein the intersecting ribs (12, 14) are pivotally connected to one another.

3. The transition piece according to any one of claims 1 or 2, wherein the ribs (12, 14) have a profile substantially matching in use at least one of the profile of the adjacent control surface (20) and/or the profile of the adjacent structural component (30).

4. The transition piece according to any one of claims 1 to 3, wherein the ribs (12, 14) are each to be oriented in parallel with the lateral edge (22) of the control surface (20) or in parallel with the edge (32) of the structural component (30).

5. The transition piece according to any one of claims 1 to 4, wherein the transition piece comprises a shear-compliant outer skin.

6. The transition piece according to claim 5, wherein the shear-compliant outer skin comprises a biaxially woven metal mesh (40).

7. The transition piece according to claim 5 or 6, wherein the shear-compliant outer skin comprises an elastomer layer.

8. The transition piece according to any one of claims 5 to 7, wherein the shear-compliant outer skin is formed from a plurality of different layers.

9. The transition piece according to any one of claims 1 to 8, wherein the edge of the transition piece that is connectable to the lateral edge (22) of the control surface (20) forms an angle of 30° to 120°, preferably 60°, with the edge of the transition piece that is connectable to the edge (32) of the structural component (30).

10. An aircraft comprising a structural component (30) and a control surface (20) pivotally fastened to the structural component, wherein a recess is formed between a lateral edge of the control surface and an edge of the structural component, said aircraft further comprising a transition piece in accordance with any one of claims 1 to 9, for bridging over the recess.

## Revendications

1. Pièce de transition destinée à former une surface continue d'un composant de structure (30) d'un avion vers une surface de commande (20), dans laquelle la surface de commande (20) présente un bord avant, un bord arrière et deux bords latéraux, le bord avant ou le bord arrière de la surface de commande (20) étant relié de manière pivotante au composant de structure (30), la pièce de transition pouvant être montée dans un évidement configuré entre un bord (32) du composant de structure et l'un des bords latéraux (22) de la surface de commande, la pièce de transition pouvant être montée de manière pivotante sur le bord du composant de structure et pouvant être montée de manière pivotante sur le bord latéral de la surface de commande, la pièce de transition étant configurée plane et pouvant être déformée dans le plan, et la pièce de transition présentant une structure d'appui (10) reálisée de nervures (12, 14) qui se croisent.

2. Pièce de transition selon la revendication 1, dans laquelle les nervures (12, 14) qui se croisent sont reliées les unes aux autres de manière pivotante.

3. Pièce de transition selon une des revendications 1 ou 2, dans laquelle les nervures (12, 14) présentent un profil qui, en utilisation, correspond sensiblement au profil de la surface de commande (20) adjacente et/ou au profil du composant de structure (30) adjacent.

4. Pièce de transition selon une des revendications 1 à 3, dans laquelle les nervures (12, 14) doivent chacune être orientées parallèlement au bord latéral (22) de la surface de commande (20) ou au bord (32) du composant de structure (30).

5. Pièce de transition selon une des revendications 1 à 4, dans laquelle la pièce de transition présente un revêtement flexible à la poussée.

6. Pièce de transition selon la revendication 5, dans laquelle le revêtement flexible à la poussée présente une grille métallique tissée bi-axiale (40).

7. Pièce de transition selon la revendication 5 ou 6, dans laquelle le revêtement flexible à la poussée présente une couche en élastomère.

8. Pièce de transition selon une des revendications 5 à 7, dans laquelle le revêtement flexible à la poussée est réalisé à partir d'une pluralité de couches différentes.

9. Pièce de transition selon une des revendications 1 à 8, dans laquelle le bord de la pièce de transition qui peut être relié au bord latéral (22) de la surface de commande (20) forme, par rapport au bord de la pièce de transition qui peut être relié au bord (32) du composant de structure (30), un angle de 30° à 120°, de préférence de 60°.

10. Avion comportant un composant de structure (30) et une surface de commande (20), qui est fixée de manière pivotante au composant de structure, dans lequel un évidement est configuré entre un bord latéral de la surface de commande et un bord du composant de structure, comportant en outre une pièce de transition selon une des revendications 1 à 9 pour ponter l'évidement.
